# EUROPEAN PATENT APPLICATION

(11) **EP 4 723 248 A1**
(43) Date of publication of application: **08.04.2026**
(21) Application number: 23940581.4
(22) Date of filing: 05.06.2023
(51) Int. Cl.: H01M 4/66, H01M 4/64, H01M 10/05, H01M 10/0566, H01M 50/536, H01M 50/54

(54) **SECONDARY BATTERY**

(71) Applicant: TERAWATT TECHNOLOGY K.K., Yokohama-shi, Kanagawa 226-0026 (JP)
(72) Inventor: IMOTO, Hiroshi, Yokohama-shi, Kanagawa 226-0026 (JP); OYAMA, Gosuke, Yokohama-shi, Kanagawa 226-0026 (JP)
(74) Representative: FRKelly
(86) International application number: PCT/JP2023/020824
(87) International publication number: WO 2024/252474

(57) **Abstract**

There is provided a technique for improving the usefulness of a secondary battery. The secondary battery includes a positive electrode 10, a first separator 30A disposed on a side of one surface of the positive electrode 10, and a first negative electrode 20A disposed to be spaced apart from the positive electrode 10 in a lamination direction with the first separator 30A interposed therebetween, where the first negative electrode 20A includes a first current collector 22A, the first current collector 22A is configured with a first resin layer 220A sandwiched between a pair of first conductive layers 222A, and the pair of first conductive layers 222A each have a thickness of 0.3 µm or more and less than 1.9 µm.

## Description

### Technical Field

An exemplary embodiment according to the present disclosure relates to a secondary battery.

### Background Art

Patent Literature 1 describes a technique of improving the safety, the magnitude of the internal resistance, the thermal conductivity, and the like of a secondary battery by using a current collector including a thin film made of metal.

### Citation List

### Patent Literature

Patent Literature 1: US Patent No. 11482711

### Summary of Invention

### Technical Problem

The present disclosure provides a technique for improving the usefulness of a secondary battery.

### Solution to Problem

In one exemplary embodiment according to the present disclosure, there is provided a secondary battery that includes a positive electrode; a first separator disposed on a side of one surface of the positive electrode; and a first negative electrode disposed to be spaced apart from the positive electrode in a lamination direction with the first separator interposed therebetween, where the first negative electrode includes a first current collector, the first current collector is configured with a first resin layer sandwiched between a pair of first conductive layers, and the pair of first conductive layers each have a thickness of 0.3 µm or more and less than 1.9 µm.

### Advantageous Effect of Invention

According to one exemplary embodiment of the present disclosure, it is possible to provide a technique for improving the usefulness of a secondary battery.

### Brief Description of Drawings

[Figure 1] Figure 1 is a view for describing a mechanism in which short-circuiting occurs between electrodes during over-discharging of a secondary battery.
[Figure 2] Figure 2 is a view for describing a mechanism in which short-circuiting occurs between electrodes during over-discharging of a secondary battery.
[Figure 3] Figure 3 is a perspective view for describing a configuration of a secondary battery.
[Figure 4] Figure 4 is a view for describing a configuration of a secondary battery according to a first embodiment.
[Figure 5] Figure 5 is a view for describing a configuration of a secondary battery according to a second embodiment.
[Figure 6] Figure 6 is a view for describing the configuration of the secondary battery according to the second embodiment.
[Figure 7] Figure 7 is a view for describing a configuration of a secondary battery according to a third embodiment.
[Figure 8] Figure 8 is a view for describing the configuration of the secondary battery according to the third embodiment.
[Figure 9] Figure 9 is a flowchart for describing a manufacturing method for a secondary battery.
[Figure 10] Figure 10 is a view for describing examples of the secondary battery.

### Description of Embodiments

Hereinafter, each embodiment of the present disclosure will be described.

In one exemplary embodiment, there is provided a secondary battery that includes a positive electrode; a first separator disposed on a side of one surface of the positive electrode; and a first negative electrode disposed to be spaced apart from the positive electrode in a lamination direction with the first separator interposed therebetween, where the first negative electrode includes a first current collector, the first current collector is configured with a first resin layer sandwiched between a pair of first conductive layers, and the pair of first conductive layers each have a thickness of 0.3 µm or more and less than 1.9 µm.

In one exemplary embodiment, the first current collector includes a first end part configured to extend outward from a side surface of the first current collector.

In one exemplary embodiment, the secondary battery further includes a second separator disposed on a side of the other surface of the positive electrode; and a second negative electrode disposed to be spaced apart from the positive electrode in the lamination direction with the second separator interposed therebetween, where the second negative electrode includes a second current collector, the second current collector is configured with a second resin layer sandwiched between a pair of second conductive layers and includes a second end part configured to extend outward from a side surface of the second current collector, and the pair of second conductive layers each have a thickness of 0.3 µm or more and less than 1.9 µm.

In one exemplary embodiment, the secondary battery further includes a metal sheet disposed to be aligned in the lamination direction with respect to the first end part and the second end part, where the metal sheet has a first bonding mark due to bonding to any one of the first end part and the second end part.

In one exemplary embodiment, the secondary battery further includes a negative electrode tab electrically connected to the first negative electrode and the second negative electrode, where the negative electrode tab has a second bonding mark due to bonding to the first end part, the second end part, and the metal sheet, and the second bonding mark is at a position different from a position of the first bonding mark when viewed from the lamination direction.

In one exemplary embodiment, the first end part has a shape recessed in a direction from the first current collector toward the metal sheet in a cross section including the first bonding mark.

In one exemplary embodiment, the first bonding mark and the second bonding mark are welding marks.

In one exemplary embodiment, the metal sheet is made of a metal including copper.

In one exemplary embodiment, a laminate including the positive electrode, the separator, and the first negative electrode is sealed inside of an airtight container together with an electrolyte solution.

In one exemplary embodiment, the first negative electrode is substantially free of a negative-electrode active material.

In one exemplary embodiment, the first negative electrode further includes a negative-electrode active material layer provided on the first current collector.

In one exemplary embodiment, the pair of first conductive layers each have a thickness of 0.5 µm or more and less than 1.5 µm.

In one exemplary embodiment, the pair of first conductive layers each are thinner than the first resin layer.

In one exemplary embodiment, the pair of first conductive layers is made of a metal including copper.

Hereinafter, each embodiment of the present disclosure will be described in detail with reference to the drawings. It is noted that in each drawing, the same or similar elements will be given the same reference numerals, and repeated descriptions will be omitted. Unless otherwise specified, a positional relationship such as up, down, left, and right will be described based on the positional relationship illustrated in the drawings. The dimensional ratio in the drawings does not indicate an actual ratio, and the actual ratio is not limited to the ratio illustrated in the drawings.

In the present disclosure, the usefulness of a secondary battery 1 includes at least a part of the energy density, safety, the monetary cost required for manufacturing, the efficiency of manufacturing, and the like of the secondary battery 1. In addition, in the present disclosure, the secondary battery 1 will be described as a lithium ion secondary battery; however, the application range of the present disclosure is not limited thereto.

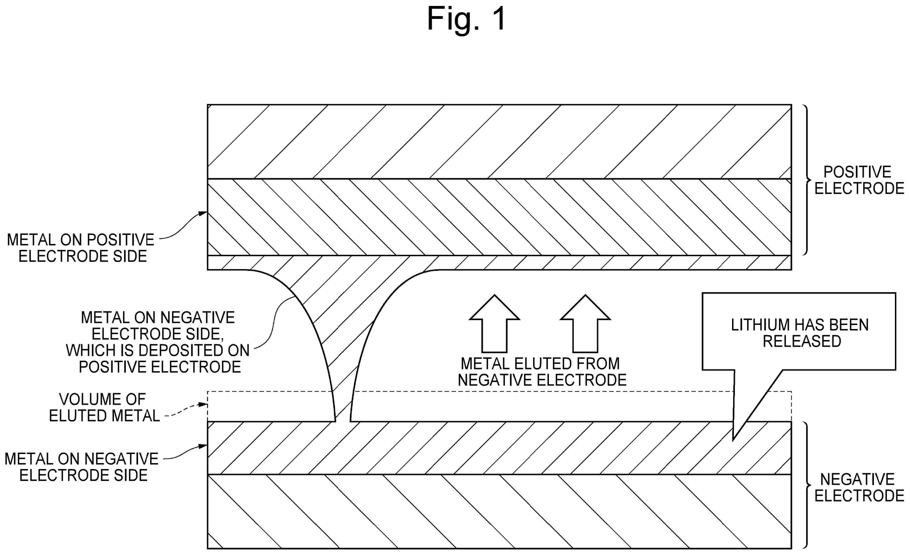

In general, in a case where a secondary battery enters an over-discharge state (that is, a state in which lithium has disappeared from the negative electrode) due to forced discharging or the like, the metal of the negative electrode is eluted into the inside of the secondary battery and deposited on the positive electrode (see Figure 1). In this case, the deposited metal forms a short-circuit between the negative electrode and the positive electrode. Then, the short-circuit causes the heat generation and ignition of the secondary battery.

The risk of heat generation and ignition is high when a plurality of secondary batteries 1 are used in series connection. In a case where the deterioration of the capacity of one cell among the plurality of cells has proceeded significantly for some kind of reason, the discharge current from the other cells flows into the cell which is in the over-discharge state due to the deterioration, which causes heat generation in the short-circuit.

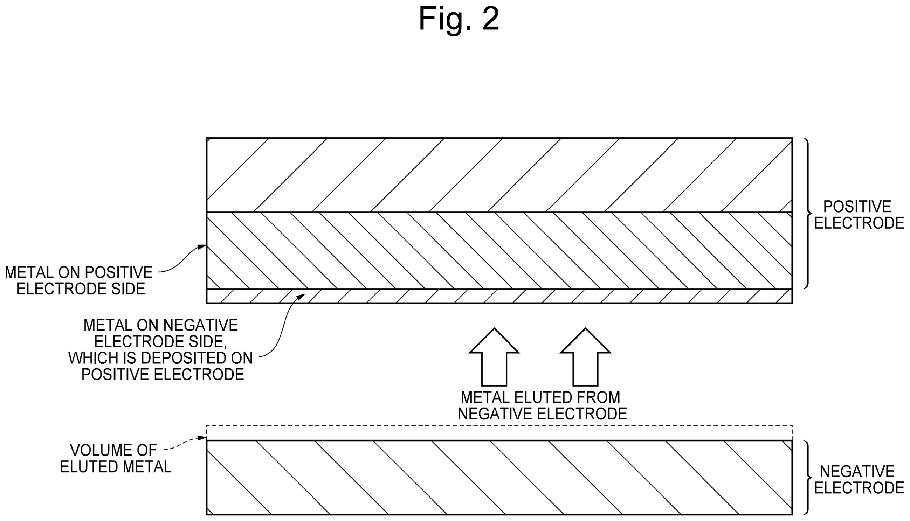

On the other hand, a negative electrode 20 of the secondary battery 1 in the present disclosure includes a negative-electrode side conductive layer 222 having a thickness of 0.3 µm or more and less than 1.9 µm. The negative-electrode side conductive layer 222 is sufficiently thin, and thus when the secondary battery 1 is in an over-discharge state, the entire negative-electrode side conductive layer 222 is deposited on a positive electrode 10 before the short-circuit is formed (see Figure 2). As a result, the formation of the short-circuit between the negative electrode 20 and the positive electrode 10 is suppressed.

### <1. Configuration example of secondary battery 1>

### [First embodiment]

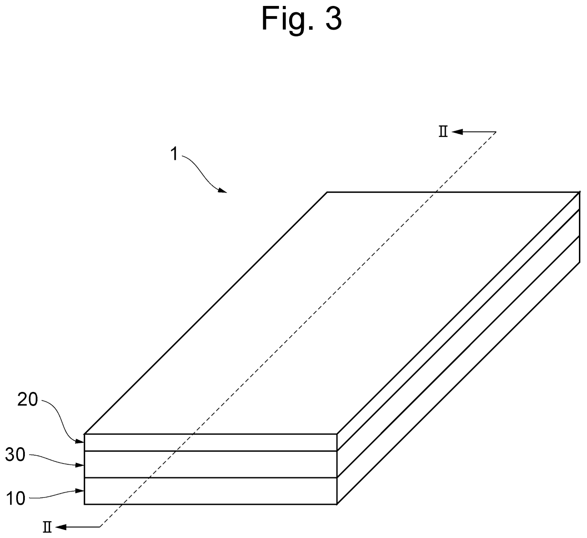

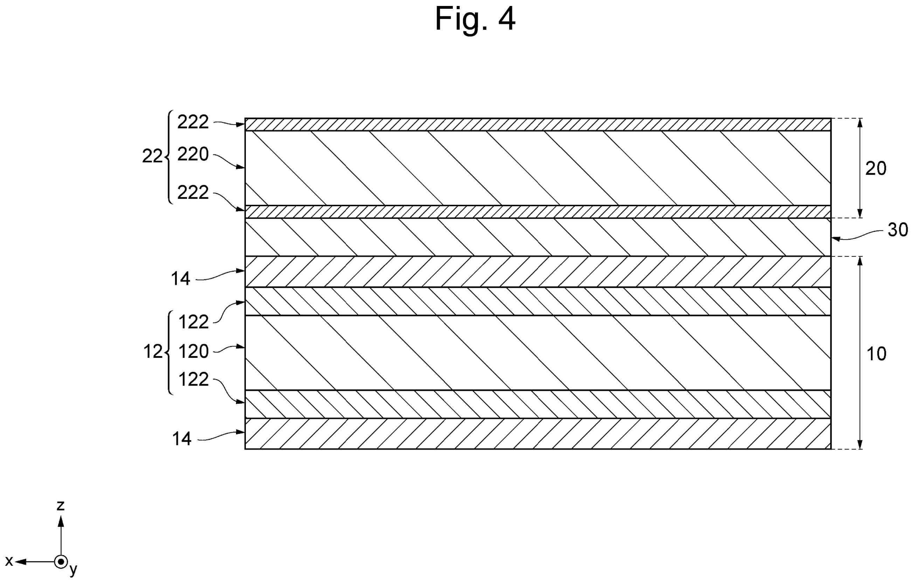

In the first embodiment, a basic configuration of the secondary battery 1 in the present disclosure will be described with reference to Figures 3 and 4. Figure 3 is a perspective view for explaining a configuration example of a secondary battery 1. As illustrated in Figure 3, the secondary battery 1 is configured to include a negative electrode 20, a separator 30, and a positive electrode 10. Figure 4 is a cross-sectional view taken along the line II-II of the secondary battery 1 in Figure 3. Hereinafter, each configuration will be described in detail with reference to Figure 4.

### (Negative electrode 20)

In one embodiment, the negative electrode 20 is configured to include a negative-electrode side current collector 22. The negative-electrode side current collector 22 is configured to include a negative-electrode side resin layer 220 and a negative-electrode side conductive layer 222 disposed on both surfaces of the negative-electrode side resin layer 220.

### - Negative-electrode side resin layer 220 -

In one embodiment, the negative-electrode side resin layer 220 may be made of a sheet-shaped (film-shaped) or fibrous resin. The resin may be, for example, at least one of a polyolefin resin such as polyethylene terephthalate (PET), polyethylene, or polypropylene, or a thermoplastic resin such as polystyrene, polyvinyl chloride, or polyamide. At least one or more of the resins may be laminated a plurality of times to constitute the negative-electrode side resin layer 220. **In** one embodiment, the negative-electrode side resin layer 220 is formed from a material having a melting point of 150°C or higher and 300°C or lower. In one embodiment, the thickness of the negative-electrode side resin layer 220 may be 3 µm or more and 10 µm or less, or may be 4 µm or more and 8 µm or less.

The negative-electrode side resin layer 220 is capable of functioning to melt, for example, in a case where abnormal heat generation occurs in an overcharged state or a high temperature state, to damage the negative electrode 20, and to block a short-circuit current inside the battery. As a result, a rapid temperature rise inside the secondary battery 1 can be suppressed, and the ignition of the battery can be suppressed. That is, the negative-electrode side resin layer 220 is capable of contributing to the improvement of the safety of the secondary battery 1. **In** one embodiment, the negative-electrode side resin layer 220 may be made of a material having insulating properties. Since the negative-electrode side current collector 22 includes the negative-electrode side resin layer 220, while ensuring a thickness (rigidity) required for the negative-electrode side current collector 22, the weight of the negative-electrode side current collector 22 can be reduced as compared with a case where the negative-electrode side current collector 22 is composed of only the conductive layer.

### - Negative-electrode side conductive layer 222 -

The negative-electrode side conductive layer 222 is formed from at least one selected from the group consisting of Cu, Ni, Ti, Fe, and a metal that does not react with Li, as well as an alloy thereof and stainless steel. The "metal that does not react with Li" may be a metal that does not react with a lithium ion or a lithium metal to form an alloy in the operating state of the secondary battery 1. The negative-electrode side conductive layer 222 is, for example, Cu. In one embodiment, the negative-electrode side conductive layer 222 is formed by vapor depositing, sputtering, electrolytic plating, or bonding the above-described material on the surfaces of both sides of the negative-electrode side resin layer 220.

In one embodiment, the thickness of each of the negative-electrode side conductive layers 222 is 0.3 µm to 1.9 µm, 0.3 µm to 1.5 µm, 0.5 µm to 1.9 µm, or 0.5 µm to 1.5 µm. The thickness of the negative-electrode side conductive layer 222 may be smaller than the thickness of the negative-electrode side resin layer 220. For example, the thickness of each of the negative-electrode side conductive layers 222 may be 50% or less, 40% or less, 30% or less, 20% or less, or 10% or less of the thickness of the negative-electrode side resin layer 220. The thickness of the negative-electrode side conductive layer 222 may be smaller than the thickness of the positive-electrode side conductive layer 122. For example, the thickness of the negative-electrode side conductive layer 222 may be 50% or less, 40% or less, 30% or less, 20% or less, or 10% or less of the thickness of the positive-electrode side conductive layer 122.

### - Other configurations related to negative electrode 20 -

In one embodiment, the negative electrode 20 is substantially free of a negative-electrode active material. The fact that the negative electrode 20 "is substantially free of the negative-electrode active material" includes, for example, that the layer thickness of the negative-electrode active material deposited on the negative electrode 20 at the end of discharging (for example, a state where the open circuit voltage of the battery is 2.5 V or more and 3.6 V or less) is 25 µm or less. In one embodiment, the layer thickness of the negative-electrode active material at the end of discharging may be 20 µm or less, 15 µm or less, 10 µm or less, or 5 µm or less, and it may be 0 µm. Since the negative electrode 20 is substantially free of a negative-electrode active material, the energy density per volume can be improved in addition to the weight energy density. It is noted that in this case, the secondary battery 1 can also be referred to as an "anode-free lithium battery", a "zero-anode lithium battery", or an "anode-less lithium battery".

In one embodiment, the negative electrode 20 does not have a negative-electrode active material before the initial charging of the battery (in a state from the assembly of the battery until the first charging is carried out). That is, in the secondary battery 1, charging/discharging may be carried out by, after the initial charging, depositing lithium metal on the negative electrode and electrolytically dissolving the deposited lithium metal. In this case, the volume and the mass occupied by the negative-electrode active material are suppressed, the volume and the mass of the entire battery are reduced, and, in principle, the energy density is increased. It is noted that the fact that "lithium metal is deposited on the negative electrode" includes not only that lithium metal is deposited on the surface of the negative electrode but also that lithium metal is deposited on the surface of the solid electrolyte interface (SEI) layer or the surface or inside of the buffer functional layer, where the solid electrolyte interface (SEI) layer will be described later.

In one embodiment, when the mass of lithium metal deposited on the negative electrode in a state where the voltage is 4.2 V is denoted as M4.2, and the mass at a voltage of 3.0 V is denoted as M3.0, M3.0/M4.2 may be 40% or less or 35% or less. In one embodiment, the ratio M3.0/M4.2 may be 1.0% or more, 2.0% or more, 3.0% or more, or 4.0% or more.

In one embodiment, the thickness of the negative electrode 20 may be 1.0 µm or more and 30 µm or less. As a result, the volume occupied by the negative electrode 20 in the secondary battery 1 can be reduced, and the energy density can be improved. The thickness of the negative electrode 20 may be 2.0 µm or more and 20 µm or less, 2.0 µm or more and 18 µm or less, or 3.0 µm or more and 15 µm or less.

In one embodiment, on at least a part of a surface facing the positive electrode 10, the negative electrode 20 may be coated with a compound (hereinafter, also referred to as a "negative electrode coating agent") containing an aromatic ring in which two or more elements selected from the group consisting of N, S, and O are each independently bonded. The negative electrode coating agent can be held on the negative electrode 20 by coordinate bonding of the above-described element to the metal atom constituting the negative electrode 20. According to this aspect, the non-uniform deposition reaction of the lithium metal can be suppressed on the surface of the negative electrode 20, and the growth of the lithium metal deposited on the negative electrode 20 in a dendritic shape can be suppressed.

In one embodiment, the negative electrode coating agent is coated on at least a part of the surface of the negative electrode 20. In one embodiment, 10% or more of the surface in terms of area ratio may have the negative electrode coating agent, and 20% or more, 40% or more, 60% or more, or 80% or more of the surface may have the negative electrode coating agent.

In one embodiment, the aromatic ring contained in the negative electrode coating agent may be an aromatic hydrocarbon such as benzene, naphthalene, azulene, anthracene, or pyrene, or a heteroaromatic compound such as furan, thiophene, pyrrole, imidazole, pyrazole, pyridine, pyridazine, pyrimidine, or pyrazine. In one example, the aromatic ring is an aromatic hydrocarbon. In one example, the aromatic ring is benzene or naphthalene. In one example, the aromatic ring is benzene.

In one embodiment, the negative electrode coating agent may be constituted by one or more nitrogen atoms bonded to an aromatic ring. In one embodiment, the negative electrode coating agent may be a compound having a structure in which a nitrogen atom is bonded to an aromatic ring and one or more elements other than the nitrogen atom, which are selected from the group consisting of N, S, and O, are each independently bonded to the aromatic ring. In a case where a compound in which a nitrogen atom is bonded to an aromatic ring is used as the negative electrode coating agent, the cycle characteristics of the battery can be improved.

The negative electrode coating agent may be, for example, at least one selected from the group consisting of benzotriazole, benzimidazole, benzimidazolethiol, benzoxazole, benzoxazolethiol, benzothiazole, mercaptobenzothiazole, and derivatives thereof. In one example, the negative electrode coating agent is at least one selected from the group consisting of benzotriazole, benzimidazole, benzoxazole, mercaptobenzothiazole, and derivatives thereof.

### (Separator 30)

The separator 30 is disposed on the negative electrode 20. In the example illustrated in Figure 4, the separator 30 is disposed on one surface of the negative electrode 20 (in Figure 4, a surface in the negative direction of the z-axis). The separator 30 physically and/or electrically isolates the negative electrode 20 and the positive electrode 10 from each other and also ensures the ion conductivity of lithium ions. In one embodiment, the separator 30 may be at least one kind selected from the group consisting of a porous member having insulating properties, a polymer electrolyte, a gel electrolyte, and an inorganic solid electrolyte. As the separator 30, one kind of member may be used alone, or two or more kinds of members may be used in combination.

In a case where the separator 30 includes a porous member having insulating properties, the pores of the porous member are filled with a substance having ion conductivity (an electrolyte solution, a polymer electrolyte, a gel electrolyte, and/or the like). As a result, the separator 30 exhibits ion conductivity. A material constituting the porous member having insulating properties is not particularly limited, and examples thereof include an insulating polymer material, and specific examples thereof include polyethylene (PE) and polypropylene (PP). That is, the separator 30 may be a porous polyethylene (PE) film, a porous polypropylene (PP) film, or a laminated structure thereof.

In one embodiment, one surface or both surfaces of the separator 30 may be coated with a separator coating layer. As a result, the cycle characteristics of the secondary battery 1 can be improved. In one embodiment, the separator coating layer may be a continuous film with a uniform thickness in an area of 50% or more of the surface of the separator 30. In one embodiment, the separator coating layer may contain a binder such as polyvinylidene fluoride (PVDF), a mixed material of styrene butadiene rubber and carboxymethyl cellulose (SBR-CMC), or polyacrylic acid (PAA). In one embodiment, inorganic particles such as silica, alumina, titania, zirconia, or magnesium hydroxide may be added to the above-described binder to constitute the separator coating layer.

In one embodiment, the thickness of the separator 30 (including a coating layer when the separator 30 includes the coating layer) may be 3.0 µm or more and 40 µm or less. As a result, the volume occupied by the separator 30 can be reduced while the negative electrode 20 and the positive electrode 10 are isolated from each other. In one embodiment, the thickness of the separator 30 may be 5.0 µm or more, 7.0 µm or more, or 10 µm or more. In one embodiment, the thickness of the separator 30 may be 30 µm or less, 20 µm or less, or 10 µm or less.

### (Positive electrode 10)

The positive electrode 10 is disposed to be spaced apart from the negative electrode 20 in the lamination direction (in Figure 4, the direction of the z-axis) with the separator 30 being interposed between the positive electrode 10 and the negative electrode 20. The positive electrode 10 is configured to include a positive-electrode side current collector 12 and a positive-electrode active material layer 14 disposed on both surfaces of the positive-electrode side current collector 12. The positive-electrode side current collector 12 is configured to include a positive-electrode side resin layer 120 and a positive-electrode side conductive layer 122 disposed on both surfaces of the positive-electrode side resin layer 120. In one embodiment, the configuration of the positive-electrode side resin layer 120 may be based on the configuration of the negative-electrode side resin layer 220 described above, and thus the description thereof will be omitted below.

### - Positive-electrode side conductive layer 122 -

The positive-electrode side conductive layers 122 are formed on both surfaces of the positive-electrode side resin layer 120 to sandwich the positive-electrode side resin layer 120. The positive-electrode side conductive layer 122 is in physical and/or electrical contact with the positive-electrode active material layer 14 and functions to transfer electrons to and from the positive-electrode active material layer 14. The positive-electrode side conductive layer 122 is composed of a conductor that does not react with lithium ions in the battery. In one embodiment, the positive-electrode side conductive layer 122 is composed of at least one kind of material selected from the group consisting of aluminum, titanium, stainless steel, nickel, and an alloy thereof. In one example, the positive-electrode side conductive layer 122 is aluminum or an aluminum alloy. In one embodiment, the positive-electrode side conductive layer 122 is formed by vapor depositing, sputtering, electrolytic plating, or bonding the above-described material on the surfaces of both sides of the positive-electrode side resin layer 120. In one embodiment, the thickness of each positive-electrode side conductive layer 122 may be 0.5 µm or more and 5 µm or less, 0.7 µm or more and 3 µm or less, or 0.8 µm or more and 2.0 µm or less.

### - Positive-electrode active material layer 14 -

The positive-electrode active material layer 14 is formed on both surfaces of the positive-electrode side current collector 12. As the positive-electrode active material layer 14, a publicly known material may be appropriately selected depending on the use application. The thickness of the positive-electrode active material layer 14 may be appropriately adjusted according to the desired capacity and rate characteristics of the battery. In one embodiment, the thickness of each of the positive-electrode active material layers 14 is, for example, 20 µm or more and 150 µm or less.

In one embodiment, the positive-electrode active material layer 14 has a positive-electrode active material. The positive-electrode active material is a material for holding a carrier metal in the positive-electrode active material layer 14 and thus can also be referred to as a host material of the carrier metal. The positive-electrode active material may be a material for holding lithium ions in the positive-electrode active material layer 14, and in this case, by charging/discharging of the battery, the positive-electrode active material is filled with lithium ions, and lithium ions are desorbed from the positive-electrode active material. As a result, the stability and the output voltage of the battery can be improved.

In one embodiment, the positive-electrode active material is a metal oxide or a metal phosphate. The metal oxide may be, for example, a cobalt oxide-based compound, a manganese oxide-based compound, or a nickel oxide-based compound. The metal phosphate may be, for example, an iron phosphate-based compound or a cobalt phosphate-based compound. In one embodiment, the positive-electrode active material may be at least one selected from the group consisting of LiCoO₂, LiNixCoyMnzO (x + y + z = 1), LiNixCoyAlzO (x + y + z = 1), LiNixMnyO (x + y = 1), LiNiO₂, LiMn₂O₄, LiFePO₄, LiCoPO₄, LiFeOF, LiNiOF, and LiTiS₂. The positive-electrode active material may be used alone or in a combination of two or more kinds thereof. In one embodiment, the content of the positive-electrode active material in the positive-electrode active material layer 14 may be 50% by mass or more and 100% by mass or less with respect to the entire positive-electrode active material layer 14.

In one embodiment, the positive-electrode active material layer 14 may contain one or more components other than the positive-electrode active material.

In one embodiment, the positive-electrode active material layer 14 may contain a positive-electrode sacrificial agent. The positive-electrode sacrificial agent is a lithium-containing compound which causes an oxidation reaction and substantially does not cause a reduction reaction in a charge/discharge potential range of the positive-electrode active material.

In one embodiment, the positive-electrode active material layer 14 may contain a gel electrolyte. The gel electrolyte is capable of improving the adhesive force between the positive-electrode active material layer 14 and the positive-electrode side current collector 12. In one example, the gel electrolyte contains a polymer, an organic solvent, and a lithium salt. The polymer in the gel electrolyte may be, for example, a copolymer of polyethylene and/or polyethylene oxide, polyvinylidene fluoride, a copolymer of polyvinylidene fluoride and hexafluoropropylene, or the like.

In one embodiment, the positive-electrode active material layer 14 may contain a conductive auxiliary agent and/or a binder. In one example, the conductive auxiliary agent is carbon black, a single-walled carbon nanotube (SWCNT), a multi-walled carbon nanotube (MWCNT), a carbon nanofiber (CF), or the like. In one example, the binder is polyvinylidene fluoride, polytetrafluoroethylene, styrene butadiene rubber, an acrylic resin, a polyimide resin, or the like. In one embodiment, the content of the conductive auxiliary agent is 0.5% by mass and 30% by mass or less with respect to the entire positive-electrode active material layer 14. In one embodiment, the content of the binder may be 0.5% by mass and 30% by mass or less with respect to the entire positive-electrode active material layer 14.

In one embodiment, the positive-electrode active material layer 14 may contain a polymer electrolyte. In one example, the polymer electrolyte is a solid polymer electrolyte that mainly contains a polymer and an electrolyte, and a semisolid polymer electrolyte that mainly contains a polymer, an electrolyte, and a plasticizer. In one embodiment, the total content of the polymer electrolyte may be 0.5% by mass and 30% by mass or less with respect to the entire positive-electrode active material layer 14.

According to the secondary battery 1, the formation of the short-circuit during over-discharging of the secondary battery 1 is suppressed. As described above with reference to Figures 1 and 2, the entire negative-electrode side conductive layer 222 is eluted during over-discharging. As a result, no conductive material is present on the surface of the negative electrode 20 facing the positive electrode 10, and thus the formation of the short-circuit between the electrodes is suppressed even if the metal eluted onto the positive electrode 10 is deposited.

### (Electrolyte solution)

In one embodiment, the secondary battery 1 may contain an electrolyte solution. The electrolyte solution is a liquid containing a solvent and an electrolyte and has ion conductivity. The electrolyte solution may be rephrased as a liquid electrolyte and acts as a conductive path for lithium ions. Therefore, in a case where the secondary battery 1 has an electrolyte solution, the internal resistance is reduced, and the energy density, the capacity, and the cycle characteristics can be improved.

The electrolyte solution may be, for example, a solution that fills the housing (pouch) of the secondary battery 1. In addition, for example, the electrolyte solution may be infiltrated into the separator 30, and in addition, the electrolyte solution may be retained by the polymer to constitute a polymer electrolyte or a gel electrolyte.

The electrolyte contained in the electrolyte solution may be, for example, a lithium salt. The lithium salt may be, for example, one selected from the group consisting of Lil, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(C₂O₄)₂, LiB(O₂C₂H₄)F₂, LiB(OCOCF₃)₄, LiNO₃, and Li₂SO₄, or a combination of two or more thereof.

As a solvent to be contained in the electrolyte solution, for example, a non-aqueous solvent having a fluorine atom (hereinafter, referred to as a "fluorinated solvent") and a non-aqueous solvent having no fluorine atom (hereinafter, referred to as a "non-fluorine solvent") may be added.

The fluorinated solvent may be, for example, 1,1,2,2-tetrafluoroethyl-2,2,3,3-tetrafluoropropyl ether, 1,1,2,2-tetrafluoroethyl-2,2,2-trifluoroethyl ether, and 1H,1H,5H-octafluoropentyl-1,1,2,2-tetrafluoroethyl ether, or the like.

The non-fluorine solvent may be, for example, triethylene glycol dimethyl ether, tetraethylene glycol dimethyl ether, 1,2-dimethoxyethane, dimethoxyethane, dimethoxypropane, dimethoxybutane, diethylene glycol dimethyl ether, acetonitrile, dimethyl carbonate, diethyl carbonate, ethyl methyl carbonate, ethylene carbonate, propylene carbonate, chloroethylene carbonate, methyl acetate, ethyl acetate, propyl acetate, methyl propionate, ethyl propionate, trimethyl phosphate, triethyl phosphate, or 12-crown-4.

The above fluorinated solvent and/or non-fluorine solvent may be freely used alone as a single type, or in a combination of two or more types at any proportion. The contents of the fluorinated solvent and the non-fluorine solvent are not particularly limited, and the proportion of the fluorinated solvent in the total volume of the solvent may be 0% to 100% by volume, and the proportion of the non-fluorine solvent in the total volume of the solvent may be 0% to 100% by volume.

### [Second Embodiment]

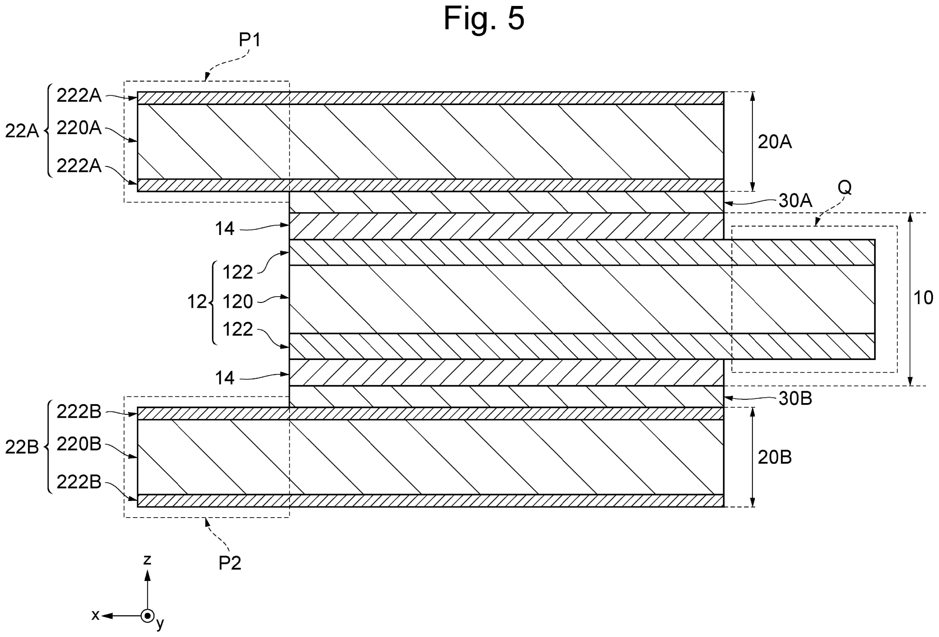

The secondary battery 1 according to the second embodiment further includes a second negative electrode 20B and a second separator 30B, as compared with the secondary battery 1 according to the first embodiment. In addition, the negative-electrode side current collector 22 includes an end part P configured to extend outward from a side surface of the negative-electrode side current collector 22. The configuration of the secondary battery 1 according to the second embodiment will be described with reference to Figure 5.

The secondary battery 1 includes a first negative electrode 20A, a first separator 30A, a positive electrode 10, a second separator 30B, and a second negative electrode 20B.

The first negative electrode 20A is configured to include a first current collector 22A. The first current collector 22A is configured to include a first resin layer 220A and a first conductive layer 222A disposed on both surfaces of the first resin layer 220A. In addition, the first current collector 22A includes a first end part P1 configured to extend outward from a side surface (in Figure 5, a positive direction of the x-axis) of the first current collector 22A. In one embodiment, the first end part P1 may be a part of the first current collector 22A as illustrated in Figure 5.

The second negative electrode 20B is configured to include a second current collector 22B. The second current collector 22B is configured to include a second resin layer 220B and a second conductive layer 222B disposed on both surfaces of the second resin layer 220B. In addition, the second current collector 22B includes a second end part P2 configured to extend outward from a side surface (in Figure 5, a positive direction of the x-axis) of the second current collector 22B. In one embodiment, the second end part P2 may be a part of the second current collector 22B as illustrated in Figure 5.

The configurations of the first resin layer 220A and the second resin layer 220B may be the same as the configuration of the negative-electrode side resin layer 220 according to the first embodiment. In addition, the configurations of the first conductive layer 222A and the second conductive layer 222B may be the same as the configuration of the negative-electrode side resin layer 220 according to the first embodiment. Therefore, in the following description, the descriptions of the first resin layer 220A, the second resin layer 220B, the first conductive layer 222A, and the second conductive layer 222B will be omitted.

The configurations of the first separator 30A and the second separator 30B may be the same as the configuration of the separator 30 according to the first embodiment. Therefore, in the following description, the descriptions of the first separator 30A and the second separator 30B will be omitted.

In the following description, unless otherwise specified, the first negative electrode 20A and the second negative electrode 20B are referred to as "negative electrode 20", the first current collector 22A and the second current collector 22B are referred to as "negative-electrode side current collector 22", the first resin layer 220A and the second resin layer 220B are referred to as "negative-electrode side resin layer 220", the first conductive layer 222A and the second conductive layer 222B are referred to as "negative-electrode side conductive layer 222", and the first end part P1 and the second end part P2 are referred to as "end part P", respectively.

The positive-electrode side current collector 12 of the positive electrode 10 according to the second embodiment further includes an end part Q exposed from the positive-electrode active material layer 14, as compared with the positive-electrode side current collector 12 of the positive electrode 10 according to the first embodiment.

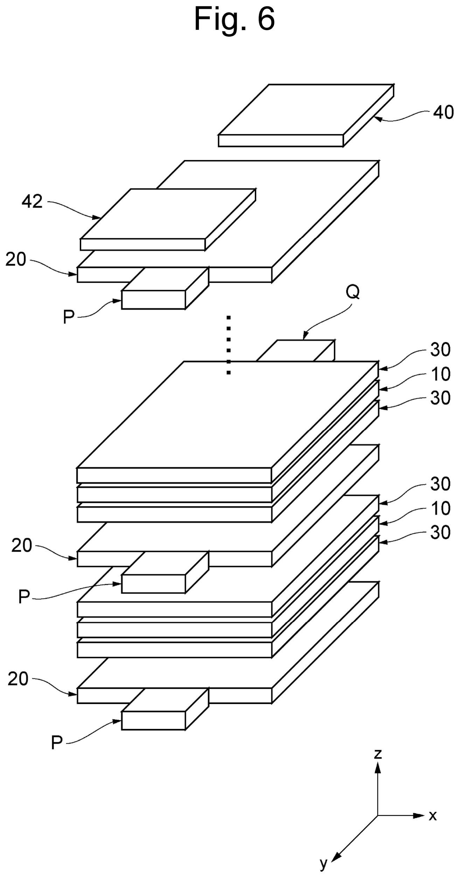

As illustrated in Figure 6, in one embodiment, a plurality of negative electrodes 20, a plurality of separators 30, and a plurality of positive electrodes 10 may be respectively laminated to constitute the secondary battery 1. The respective end parts P extend in the positive direction of the y-axis when viewed from the secondary battery 1 and may be arranged in a row in the lamination direction. Each end part P is electrically bonded to the negative electrode tab 42. Similarly, the end parts Q included in the respective positive electrodes 10 extend in the negative direction of the y-axis when viewed from the secondary battery 1 and may be arranged in a row in the lamination direction. Each end part Q is electrically bonded to the positive electrode tab 40.

According to the configuration of the secondary battery 1 according to the second embodiment, the energy density of the secondary battery 1 can be improved. This is because lithium ions can be stored, for example, between the positive electrode 10 and the first negative electrode 20A and between the positive electrode 10 and the second negative electrode 20B.

In addition, according to this configuration, the usefulness of the secondary battery 1 can be further improved. This is because the plurality of negative electrodes 20 can be energized from the negative electrode tab 42 by electrically connecting the negative electrode tab 42 to each end part P. In addition, this is because the plurality of positive electrodes 10 can be energized from the positive electrode tab 40 by electrically connecting the positive electrode tab 40 to each end part Q.

### [Third embodiment]

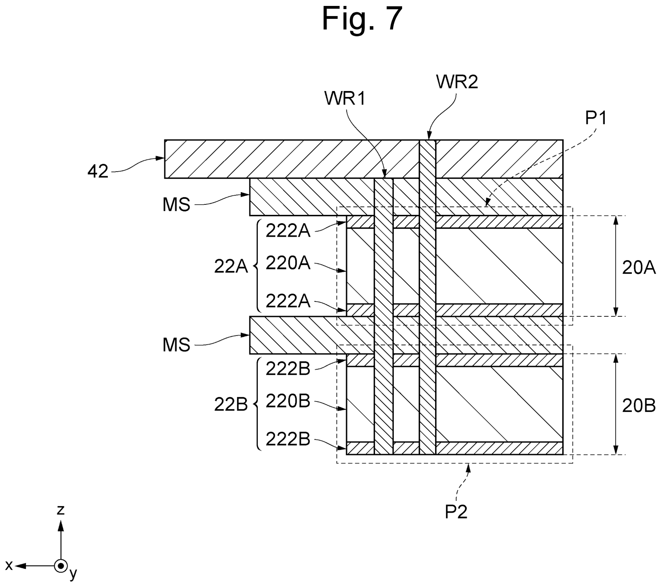

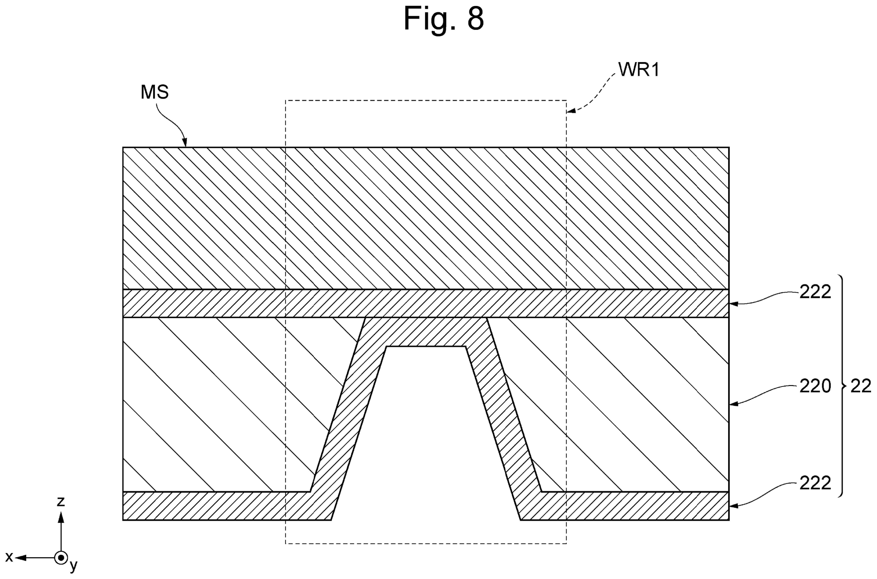

The secondary battery 1 according to the third embodiment further includes a metal sheet MS and a negative electrode tab 42 as compared with the secondary battery 1 according to the second embodiment. The configuration of the secondary battery 1 according to the third embodiment will be described with reference to Figures 7 and 8.

Figure 7 is a view illustrating a state in which the end part P, the metal sheet MS, and the negative electrode tab 42 are bonded to each other.

The metal sheets MS are disposed to be aligned in the lamination direction with respect to the end part P. The metal sheet MS has a first bonding mark WR1 due to bonding to the end part P. In one embodiment, the metal sheet MS is formed from at least one kind of material selected from the group consisting of copper, titanium, stainless steel, nickel, and an alloy thereof. In one example, the metal sheet MS is a hard copper foil. In one example, the metal sheet MS is a soft copper foil. In one embodiment, the metal sheet MS may be made of the same material as the negative-electrode side conductive layer 222. In addition, the negative electrode tab 42 has a second bonding mark WR2 due to bonding to the end part P. The second bonding mark WR2 is at a position different from a position of the first bonding mark WR1 when viewed from the lamination direction.

The first bonding mark WR1 has a region in which the metal sheet MS and the end part P are integrated. In addition, the second bonding mark WR2 has a region in which the negative electrode tab 42, the metal sheet MS, and the end part P are integrated. That is, the end part P is directly connected to the negative electrode tab 42 in the second bonding mark WR2 and is indirectly connected to the negative electrode tab 42 through the metal sheet MS connected in the first bonding mark WR1. Hereinafter, the metal sheet MS and the negative electrode tab 42 are collectively referred to as an "object to be bonded".

In one embodiment, the object to be bonded is bonded to the end part P by a method in which the energization between the object to be bonded and the end part P is not inhibited. The object to be bonded may be bonded to the end part P by a method of forming an atomic-level bond (for example, a metallic bond) between the object to be bonded and the end part P. According to such bonding, the thermal conductivity between the metal sheet MS and the end part P is increased.

The object to be bonded may be bonded to the end part P by any of metallurgical bonding, mechanical bonding, and chemical bonding. The metallurgical bonding includes welding, pressure bonding, and brazing. The welding includes, for example, arc welding, electron beam welding, gas welding, laser welding, and the like. The pressure bonding includes, for example, ultrasonic bonding, frictional pressure bonding, diffusion bonding, and the like. The brazing includes, for example, soldering and the like. The mechanical bonding includes, for example, riveting, caulking, bolt bonding, shrink fitting, folding, and the like. The chemical bonding includes, for example, adhesion with an adhesive, and the like.

In one embodiment, the object to be bonded is bonded to the end part P by ultrasonic bonding. Ultrasonic bonding is a bonding method in which pressure and vibration are applied between two metals to cause atomic-level bonding between the two metals. Since the bonding mark formed by ultrasonic bonding may cause the metal to melt, it can also be said that the bonding mark is a welding mark.

Ultrasonic bonding makes it possible to bond the object to be bonded to the end part P in a short time. In addition, the ultrasonic bonding makes it possible to bond the object to be bonded to the end part P without applying heat. In addition, in the ultrasonic bonding, no other material is consumed for bonding. As described above, the ultrasonic bonding is capable of improving the manufacturing efficiency of the secondary battery 1. In one embodiment, the ultrasonic bonding may be rotary ultrasonic bonding that makes it possible to carry out continuous processing.

As illustrated in Figure 8, in one embodiment, a shape recessed in a direction from the negative-electrode side current collector 22 toward the metal sheet MS is provided in a cross section including the first bonding mark WR1. The first bonding mark WR1 is formed by applying pressure from a surface of the negative-electrode side current collector 22 on which the metal sheet MS is not provided toward a surface of the negative-electrode side current collector 22 on which the metal sheet MS is provided. In one embodiment, the first bonding mark WR1 is formed by pressing a horn for ultrasonic bonding against the negative-electrode side current collector 22. In this case, the opposite surface may be deformed due to manufacturing reasons (for example, pressure applied by an anvil corresponding to a horn, etc.).

As described above, by applying pressure from the surface on which the metal sheet MS is not provided to bond the metal sheet MS to the negative-electrode side current collector 22, it is possible to suppress a decrease in the yield at the time of the manufacturing of the negative electrode 20. If the horn is pressed from above the metal sheet MS, the adhesive force between the horn and the metal sheet MS may exceed the adhesive force between the metal sheet MS and the negative-electrode side current collector 22. In such a case, the possibility of the peeling of the bonding between the metal sheet MS and the negative-electrode side current collector 22 increases when the horn for ultrasonic bonding is detached from the metal sheet MS. This is considered to be because a large amount of heat is generated between the horn and the metal sheet MS when ultrasonic bonding is carried out. On the other hand, when the horn is pressed from the surface of the negative-electrode side current collector 22 on which the metal sheet MS is not provided, the heat generation is relatively suppressed, and thus the peeling of the bonding when the horn is detached can be suppressed.

As illustrated in Figure 7, the negative electrode tab 42 is disposed to be aligned in the lamination direction (the direction of the z-axis) with respect to each end part P of the negative-electrode side current collector 22 and each metal sheet MS. In one embodiment, the negative electrode tab 42 may be disposed above or below the end part P of each negative-electrode side current collector 22 and each metal sheet MS. In one embodiment, the negative electrode tab 42 may be disposed between a certain end part P and an end part P adjacent to the certain end part P.

The negative electrode tab 42 is made of a conductive material. The negative electrode tab 42 may be made of, for example, copper or an alloy containing copper.

The negative electrode tab 42 is bonded to each end part P of each negative-electrode side current collector 22 and each metal sheet MS. As a result, the negative electrode tab 42 is electrically connected to each negative electrode 20 via each end part P. A second bonding mark WR2 due to the bonding to each end part P is formed on the negative electrode tab 42. The second bonding mark WR2 may be one or a plurality of points (spots) when viewed in a plan view, or may be a continuous line or surface.

The first bonding mark WR1 is formed for each of the end parts P. In other words, one first bonding mark WR1 is not formed across the plurality of end parts P. On the other hand, the second bonding mark WR2 is formed over the entirety of the negative electrode tab 42, each end part P, and each metal sheet MS. That is, the second bonding mark WR2 is formed to continuously penetrate from the negative electrode tab 42 to the end part P of the lowermost layer in the lamination direction.

By the way, as described above, the negative-electrode side resin layer 220 is capable of suppressing a rapid temperature rise inside the secondary battery 1 and is capable of suppressing the ignition of the battery, for example, when abnormal heat generation occurs in an overcharged state or a high temperature state. In the current collector having a configuration in which the resin layer is sandwiched between the conductive layers, it is difficult to ensure stable bonding quality (variation control) in the bonding of the end part of the current collector and the electrode tab or in each layer as the number of current collectors increases or as the thickness of the resin layer increases. For example, when the electrode tab and all the end parts are pressed with a strong force in an attempt to weld the electrode tab and all the end parts, the conductive layer at the end part may be damaged or broken, for example, when the conductive layer is thin. On the other hand, when the electrode tab is welded with a force that does not damage the conductive layer, there is a concern that the bonding may be insufficient and the resistance between the end part of the current collector and the electrode tab may increase.

In this regard, in the secondary battery 1 according to one embodiment, the metal sheet MS is disposed between at least one end part P. In the second bonding mark WR2, the metal sheet MS functions as an additional conductive layer of the negative-electrode side conductive layer 222 and increases the proportion of the conductive layer to the negative-electrode side resin layer 220. Therefore, the increase in resistance in the second bonding mark WR2 can be suppressed. As a result, the output characteristics of the secondary battery 1 can be improved. In addition, the metal sheet MS can also function as a protective layer of the negative-electrode side conductive layer 222 at the end part P in a case of bonding the negative electrode tab 42 to the end part P. As a result, for example, in a case where the total number (the number of laminations) of the negative electrodes 20 of the secondary battery 1 is large, the damage and breakage of the negative-electrode side conductive layer 222 can be suppressed even if the negative electrode tab 42 and each end part P are pressed and bonded with a strong force. This makes it possible to improve the production yield of the secondary battery 1. In one embodiment, the resistance of the second bonding mark WR2 may be 5.0 mΩ or less, may be 3.0 mΩ or less, may be 1.0 mΩ or less, or may be 0.5 mΩ or less.

### <2. Manufacturing method for secondary battery 1>

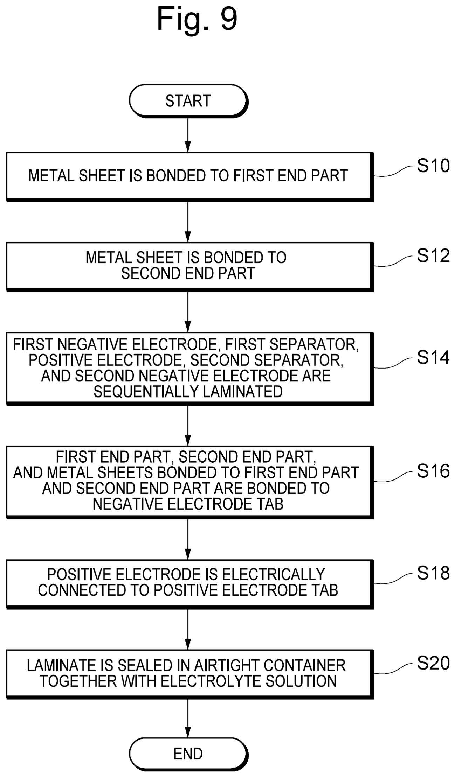

One example of the manufacturing method for the secondary battery 1 according to one embodiment will be described with reference to the flowchart of Figure 9. Here, the manufacturing method for the secondary battery 1 according to the third embodiment described above will be described as an example. It is noted that it is assumed that all of the negative electrode 20 (the first negative electrode 20A and the second negative electrode 20B), the separator 30 (the first separator 30A and the second separator 30B), and the positive electrode 10 are prepared.

First, the metal sheet MS is bonded to the first end part P1 of the first negative electrode 20A (S10). As a result, the first bonding mark WR1 is formed between the first negative electrode 20A and the metal sheet MS (see Figure 7).

Next, the metal sheet MS is bonded to the second end part P2 of the second negative electrode 20B (S12). As a result, the first bonding mark WR1 is formed between the second negative electrode 20B and the metal sheet MS (see Figure 7). The bonding of the metal sheet MS in the steps S10 and S12 is also referred to as "preliminary bonding". The preliminary bonding is carried out prior to the bonding between the first negative electrode 20A or the second negative electrode 20B and the negative electrode tab 42.

Next, the first negative electrode 20A on which the metal sheet MS is bonded, the first separator 30A, the positive electrode 10, the second separator 30B, and the second negative electrode 20B on which the metal sheet MS is bonded are laminated in this order (S14, see Figure 5).

Next, the first end part P1, the second end part P2, and the metal sheet MS bonded to each of the first end part P1 and the second end part P2 are bonded to the negative electrode tab 42 (S16). As a result, the second bonding mark WR2 is formed between the plurality of end parts P, the plurality of metal sheets MS, and the negative electrode tab 42 (see Figure 7).

Next, the positive electrode 10 is electrically connected to the positive electrode tab 40 (S18).

Next, the laminate obtained in S18 is sealed in an airtight container (including a housing or a pouch) together with an electrolyte solution (S20). It is noted that in a case where the preliminary bonding (S10 and S12) is not carried out, in the step ST14, the metal sheet MS may be laminated on the first negative electrode 20A and the second negative electrode 20B, and in the step ST16, the first end part P1, the second end part P2, and the metal sheet MS laminated to each of the first end part P1 and the second end part P2 may be collectively bonded to the negative electrode tab 42.

### <3. Method of using secondary battery 1>

The secondary battery 1 is charged/discharged by connecting the positive electrode tab 40 to one end of the external circuit and connecting the negative electrode tab 42 to the other end of the external circuit. The external circuit may be, for example, a resistor, a power source, an apparatus, a device, another battery, a potentiostat, or the like. The respective end parts P of the plurality of negative electrodes 20 may be connected to the external circuit at the same potential. In addition, the respective negative electrode end parts Q of the plurality of positive electrodes 10 may be connected to the external circuit at the same potential.

When a voltage is applied between the positive electrode tab 40 and the negative electrode tab 42 such that a current flows from the negative electrode tab 42 to the positive electrode tab 40 through an external circuit, the secondary battery 1 is charged, and lithium metal is deposited on the negative electrode 20. In a case where the positive electrode tab 40 and the negative electrode tab 42 of the secondary battery 1 after charging are connected through a desired external circuit, the secondary battery 1 is discharged, and the lithium metal of the negative electrode 20 is electrolytically dissolved.

In one embodiment, in the secondary battery 1, a solid electrolyte interface layer (SEI layer) may be formed on the surface of the negative electrode 20 or the surface of the separator 30 (that is, at the interface between the negative electrode 20 and the separator 30) by the first charging (initial charging) after the assembly of the battery. The SEI layer may contain, for example, an inorganic compound containing lithium, an organic compound containing lithium, or the like. In one embodiment, the thickness of the SEI layer is 1.0 nm or more and 10 µm or less. In a case where the SEI layer is formed in the secondary battery 1, lithium metal is deposited or dissolved at the interface between the negative electrode 20 and/or the separator 30 and the SEI layer due to charging/discharging.

According to the secondary battery 1 described above, the usefulness of the battery can be improved.

### <4. Modification example>

In the above-described embodiment, the negative electrode 20 has been described as being substantially free of a negative-electrode active material; however, the present disclosure is not limited thereto. The negative electrode 20 may further include a negative-electrode active material layer provided on the negative-electrode side current collector 22. That is, a negative-electrode active material layer may be present between the separator 30 and the negative-electrode side current collector 22. The negative-electrode active material layer faces the positive-electrode active material layer 14 with the separator 30 being sandwiched between the negative-electrode active material layer and the positive-electrode active material layer 14.

In one embodiment, the negative-electrode active material layer is disposed on both surfaces of the negative-electrode side current collector 22. In one embodiment, the negative-electrode active material layer may be disposed only on one surface of the negative-electrode side current collector 22.

The negative-electrode active material layer is a substance that causes an electrode reaction in the negative electrode, that is, an oxidation reaction and a reduction reaction. The negative-electrode active material layer may be, for example, lithium metal, an alloy containing lithium metal, a carbon-based substance, and a metal oxide, as well as a metal alloyed with lithium and an alloy containing the metal, and the like. The carbon-based substance may be, for example, graphene, graphite, hard carbon, a carbon nanotube, or the like. The metal oxide may be, for example, a titanium oxide-based compound, a cobalt oxide-based compound, and the like. The above-described metal to be alloyed with lithium may be, for example, silicon, silicon oxide, germanium, tin, lead, aluminum, and gallium, as well as metals obtained by pre-doping silicon, silicon oxide, germanium, tin, lead, aluminum, and gallium with lithium.

### <5. Examples>

Next, examples and comparative examples are described below. The present disclosure is not limited by the following examples and comparative examples.

The usefulness of the secondary battery 1 was checked by an experiment based on a forced discharging test specified in T8 of 38.3.4.8 of "UN38.3 Transport Test for Lithium Ion Batteries to Test Safety during Transport recommended by United Nations". Specifically, a direct current power source of 12 V was connected in series to the secondary battery 1 having the same configuration as the configuration of the third embodiment, and the secondary battery 1 at room temperature was subjected to forced discharging for 30 minutes at an initial current (for example, 2 C). In addition, after the forced discharging, the secondary battery 1 was observed for 7 days. Then, during the period of the forced discharging and within the observation period after the forced discharging, it was determined whether or not the breakage occurred in the welded part of the secondary battery 1 (that is, the bonding part between the negative electrode tab 42 and the end part P) and whether or not the cracking occurred in the airtight container of the secondary battery 1. It is noted that the current was calculated from a voltage drop across a resistor that was connected in series to the secondary battery 1.

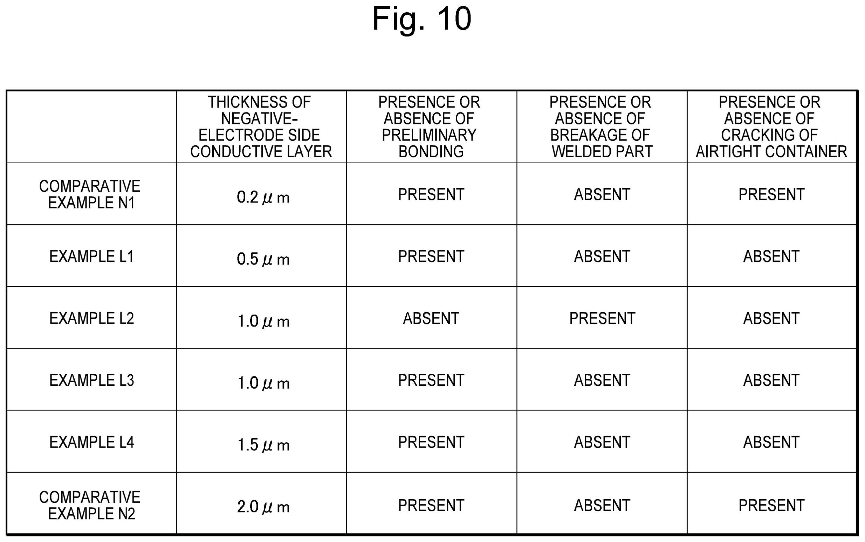

Figure 10 is a view showing the results of the above-described test for each of the different thicknesses of the negative-electrode side conductive layer 222.

In all the experiments, the negative electrode 20 including the negative-electrode side conductive layer 222 made of copper and the negative-electrode side resin layer 220 made of PET having a thickness of 4.5 µm was used. In addition, the positive electrode 10 including the positive-electrode side conductive layer 122 made of aluminum, the positive-electrode side resin layer 120 made of PET, and the positive-electrode active material layer 14 made of LiNixCoyMnzO (x + y + z = 1) was used. In addition, a ceramic coated separator (CCS) was used as the separator 30. In addition, a 4 M dimethoxyethane solution of lithium bis(fluorosulfonyl)imide (LiFSI) was used as the electrolyte solution. In addition, a rolled copper foil having a thickness of 8 µm was used as the metal sheet MS. Under these common conditions, the relationship between the thickness of the negative-electrode side conductive layer 222, the presence or absence of the preliminary bonding of the metal sheet MS, the breakage of the welded part, and the cracking of the airtight container was checked.

### (Influence of thickness of negative-electrode side conductive layer 222 on cracking of airtight container)

According to Comparative Example N1, when the thickness of the negative-electrode side conductive layer 222 was 0.2 µm, the airtight container was cracked (presence or absence of the cracking of the airtight container: present). On the other hand, according to Example L1, when the thickness of the negative-electrode side conductive layer 222 was 0.5 µm, the airtight container was not cracked (presence or absence of the cracking of the airtight container: absent).

In addition, according to Comparative Example N2, when the thickness of the negative-electrode side conductive layer 222 was 2.0 µm, the airtight container was cracked (presence or absence of the cracking of the airtight container: present). On the other hand, according to Example L4, when the thickness of the negative-electrode side conductive layer 222 was 1.5 µm, the airtight container was not cracked (presence or absence of the cracking of the airtight container: absent).

In addition, according to Example L2 and Example L3, regardless of the presence or absence of the preliminary bonding of the metal sheet MS, when the thickness of the negative-electrode side conductive layer 222 was 1.0 µm, the airtight container was not cracked (presence or absence of the cracking of the airtight container: absent).

It is noted that the case where the metal sheet MS is preliminarily bonded is, for example, a case where the metal sheet MS is bonded to each end part P prior to the bonding of the plurality of end parts P to the negative electrode tab 42, as in the step ST10 and the step ST12 of Figure 9. That is, the case is a case where the first bonding mark WR1 is formed at the end part P. On the other hand, the case where the metal sheet MS is not preliminarily bonded is a case where the metal sheet MS is also bonded together when bonding the plurality of end parts P and the negative electrode tab 42. That is, the case is a case where the first bonding mark WR1 is not formed at the end part P.

From the above results, it is considered that, when the thickness of the negative-electrode side conductive layer 222 is 0.3 µm or more and less than 1.9 µm, the probability of the cracking of the airtight container can be reduced regardless of the presence or absence of the bonding of the metal sheet MS. In particular, when the thickness of the negative-electrode side conductive layer 222 is 0.5 µm or more and 1.5 µm or less, the cracking of the airtight container does not occur. When the thickness of the negative-electrode side conductive layer 222 is large (for example, 2.0 µm or more), as described above, the short-circuiting occurs between the electrodes due to the elution of the metal in the over-discharge state, and the airtight container is cracked due to the heat generation. On the other hand, when the thickness of the negative-electrode side conductive layer 222 is small (for example, 0.2 µm or less), the resistance as the negative-electrode side current collector 22 increases, and thus the load characteristics of the entire secondary battery 1 deteriorate.

### (Influence of preliminary bonding of metal sheet MS on welded part breakage)

According to Example L2, in a case where the metal sheet MS was not preliminarily bonded, the welded part was broken (presence or absence of the breakage in the welded part: present). On the other hand, according to Example L3, in a case where the metal sheet MS was not preliminarily bonded, the welded part was not broken (presence or absence of the breakage in the welded part: absent).

From this result, it is considered that the probability of the breakage of the welded part can be reduced by preliminarily bonding the metal sheet MS.

### <6. Embodiments of present disclosure>

The embodiments of the present disclosure further include the following aspects.

### (Addendum 1)

A secondary battery 1 including:
a positive electrode 10;
a first separator 30A disposed on a side of one surface of the positive electrode 10; and
a first negative electrode 20A disposed to be spaced apart from the positive electrode 10 in a lamination direction with the first separator 30A interposed therebetween, where the first negative electrode 20A includes a first current collector 22A, the first current collector 22A is configured with a first resin layer 220A sandwiched between a pair of first conductive layers 222A, and the pair of first conductive layers 222A each have a thickness of 0.3 µm or more and less than 1.9 µm.

### (Addendum 2)

The secondary battery 1 according to Addendum 1, in which the first current collector 22A includes a first end part P1 configured to extend outward from a side surface of the first current collector 22A.

### (Addendum 3)

The secondary battery 1 according to Addendum 2, further including:
a second separator 30B disposed on a side of the other surface of the positive electrode 10; and
a second negative electrode 20B disposed to be spaced apart from the positive electrode 10 in the lamination direction with the second separator 30B interposed therebetween, where the second negative electrode 20B includes a second current collector 22B, the second current collector 22B is configured with a second resin layer 220B sandwiched between a pair of second conductive layers 222B and includes a second end part P2 configured to extend outward from a side surface of the second current collector 22B, and the pair of second conductive layers 222B each have a thickness of 0.3 µm or more and less than 1.9 µm.

### (Addendum 4)

The secondary battery 1 according to Addendum 3, further including: a metal sheet MS disposed to be aligned in the lamination direction with respect to the first end part P1 and the second end part P2, in which the metal sheet MS has a first bonding mark WR1 due to bonding to any one of the first end part P1 and the second end part P2.

### (Addendum 5)

The secondary battery 1 according to Addendum 4, further including: a negative electrode tab 42 electrically connected to the first negative electrode 20A and the second negative electrode 20B, in which the negative electrode tab 42 has a second bonding mark WR2 due to bonding to the first end part P1, the second end part P2, and the metal sheet MS, and the second bonding mark WR2 is at a position different from a position of the first bonding mark WR1 when viewed from the lamination direction.

### (Addendum 6)

The secondary battery 1 according to Addendum 5, in which the first end part P1 has a shape recessed in a direction from the first current collector 22A toward the metal sheet MS in a cross section including the first bonding mark WR1.

### (Addendum 7)

The secondary battery 1 according to Addendum 5, in which the first bonding mark WR1 and the second bonding mark WR2 are welding marks.

### (Addendum 8)

The secondary battery 1 according to Addendum 4, in which the metal sheet MS is made of a metal including copper.

### (Addendum 9)

The secondary battery 1 according to any one of Addendum 1 to Addendum 8, in which a laminate including the positive electrode 10, the first separator 30A, and the first negative electrode 20A is sealed inside of an airtight container together with an electrolyte solution.

### (Addendum 10)

The secondary battery 1 according to any one of Addendum 1 to Addendum 9, in which the first negative electrode 20A is substantially free of a negative-electrode active material.

### (Addendum 11)

The secondary battery 1 according to any one of Addendum 1 to Addendum 10, in which the first negative electrode 20A further includes a negative-electrode active material layer provided on the first current collector 22A.

### (Addendum 12)

The secondary battery 1 according to any one of Addendum 1 to Addendum 11, in which the pair of first conductive layers 222A each have a thickness of 0.5 µm or more and less than 1.5 µm.

### (Addendum 13)

The secondary battery 1 according to any one of Addendum 1 to Addendum 12, in which the pair of first conductive layers 222A each are thinner than the first resin layer 220A.

### (Addendum 14)

The secondary battery 1 according to any one of Addendum 1 to Addendum 13, in which the pair of first conductive layers 222A is made of a metal including copper.

### Reference Signs List

1: secondary battery
10: positive electrode
20A: first negative electrode
20B: second negative electrode
22A: first current collector
22B: second current collector
24: negative-electrode active material layer
220A: first resin layer
220B: second resin layer
30A: first separator
30B: second separator
222A: first conductive layer
222B: second conductive layer
40: positive electrode tab42: negative electrode tabP1: first end part
P2: second end part
MS: metal sheet
LM: intermediate laminate
WR1: first bonding mark
WR2: second bonding mark

## Claims

1. A secondary battery comprising:
a positive electrode;
a first separator disposed on a side of one surface of the positive electrode; and
a first negative electrode disposed to be spaced apart from the positive electrode in a lamination direction with the first separator interposed therebetween, where the first negative electrode includes a first current collector, the first current collector is configured with a first resin layer sandwiched between a pair of first conductive layers, and the pair of first conductive layers each have a thickness of 0.3 µm or more and less than 1.9 µm.

2. The secondary battery according to Claim 1, wherein the first current collector includes a first end part configured to extend outward from a side surface of the first current collector.

3. The secondary battery according to Claim 2, further comprising:
a second separator disposed on a side of the other surface of the positive electrode; and
a second negative electrode disposed to be spaced apart from the positive electrode in the lamination direction with the second separator interposed therebetween, where the second negative electrode includes a second current collector, the second current collector is configured with a second resin layer sandwiched between a pair of second conductive layers and includes a second end part configured to extend outward from a side surface of the second current collector, and the pair of second conductive layers each have a thickness of 0.3 µm or more and less than 1.9 µm.

4. The secondary battery according to Claim 3, further comprising:
a metal sheet disposed to be aligned in the lamination direction with respect to the first end part and the second end part,
wherein the metal sheet has a first bonding mark due to bonding to any one of the first end part and the second end part.

5. The secondary battery according to Claim 4, further comprising:
a negative electrode tab electrically connected to the first negative electrode and the second negative electrode,
wherein the negative electrode tab has a second bonding mark due to bonding to the first end part, the second end part, and the metal sheet, and
the second bonding mark is at a position different from a position of the first bonding mark when viewed from the lamination direction.

6. The secondary battery according to Claim 5, wherein the first end part has a shape recessed in a direction from the first current collector toward the metal sheet in a cross section including the first bonding mark.

7. The secondary battery according to Claim 5, wherein the first bonding mark and the second bonding mark are welding marks.

8. The secondary battery according to Claim 4, wherein the metal sheet is made of a metal including copper.

9. The secondary battery according to any one of Claims 1 to 8, wherein a laminate including the positive electrode, the first separator, and the first negative electrode is sealed inside of an airtight container together with an electrolyte solution.

10. The secondary battery according to any one of Claims 1 to 8, wherein the first negative electrode is substantially free of a negative-electrode active material.

11. The secondary battery according to any one of Claims 1 to 8, wherein the first negative electrode further includes a negative-electrode active material layer provided on the first current collector.

12. The secondary battery according to any one of Claims 1 to 8, wherein the pair of first conductive layers each have a thickness of 0.5 µm or more and less than 1.5 µm.

13. The secondary battery according to any one of Claims 1 to 8, wherein the pair of first conductive layers each are thinner than the first resin layer.

14. The secondary battery according to any one of Claims 1 to 8, wherein the pair of first conductive layers is made of a metal including copper.
